# EUROPEAN PATENT SPECIFICATION

(11) **EP 2 970 658 B1**
(45) Date of publication and mention of the grant of the patent: **09.10.2019**
(21) Application number: 14774239.9
(22) Date of filing: 07.03.2014
(51) Int. Cl.: C08L 69/00, C08L 25/12, C08L 55/02, C08K 7/14, C08K 3/22, C08K 3/34

(54) **FILLED POLYCARBONATE COMPOSITIONS**
GEFÜLLTE POLYCARBONATZUSAMMENSETZUNGEN
COMPOSITIONS DE POLYCARBONATE REMPLIES

(30) Priority: 13.03.2013 US 201313799395
(43) Date of publication of application: 20.01.2016
(73) Proprietor: Covestro LLC, Pittsburgh, PA 15205 (US)
(72) Inventor: CHIRINO, Jose, L., McMurray, PA 15317 (US); MASON, James, P., Carnegie, PA 15106 (US); HAGER, Bruce, L., Canonsburg, PA 15317 (US); ROGUNOVA, Marina, Pittsburgh, PA 15241 (US)
(74) Representative: Levpat
(86) International application number: PCT/US2014/021542
(87) International publication number: WO 2014/159024

(56) References cited:
- EP-A1- 2 133 390
- WO-A1-2012/106392
- WO-A2-02/059204
- US-A1- 2006 030 647
- US-A1- 2007 105 994
- US-A1- 2007 149 661

## Description

### FIELD OF THE INVENTION

The present invention relates in general to polycarbonate compositions, and more specifically to filled polycarbonate compositions exhibiting improved flame-retardancy.

### BACKGROUND OF THE INVENTION

Polycarbonate polymers are thermoplastic resins that are useful in a number of plastic material applications including, for example, injection molding, extrusion, rotation molding, blow molding, thermoforming, and the like. Polycarbonate thermoplastic resins exhibit a number of advantageous material properties and mechanical properties including, for example, high impact strength, excellent dimensional stability, glass-like transparency, excellent thermal resistance, and low-temperature toughness. These properties, among others, make polycarbonate thermoplastic resins attractive as engineering materials for a wide variety of applications including, for example, automotive and transportation, building and construction, electrical and electronics, telecommunication, packaging, medical, optical/opthalmic, and optical media. In various applications, flame-retardancy is an important property, for example, in electrical and electronics applications, such as appliance and equipment housings and parts.

There are a number of patents where the use of inorganic fillers in polycarbonate/acrylonitrile-butadiene-styrene blends is mentioned.

For example, Skochdopole, in U.S. Pat. No. 5,091,461 describes filled polymer blends comprising a polycarbonate, a rubber modified copolymer of a vinyl aromatic monomer and from 4 to 18 weight percent of an inorganic filler.

WO 98/51737 in the name of Parmer et al., provides a thermoplastic resin composition containing, based on 100 parts by weight of the composition, from 65 to 85 parts by weight of one or more aromatic polycarbonate resins, from 10 to 50 parts by weight of a rubber modified graft copolymer, comprising a discontinuous elastomeric phase dispersed in a continuous rigid thermoplastic phase, wherein at least a portion of the rigid thermoplastic phase is chemically grafted to the elastomeric phase, and from 1 to 15 parts by weight of a mineral filler having a mean largest characteristic dimension of from 0.1 µm to 30 µm.

U.S. Pat. No. 5,965,655, issued to Mordecai et al., details a thermoplastic molding composition having an admixture of thermoplastic polymer or blends thereof and a particular mineral additive having needle like particles and a high aspect ratio of length to diameter. The composition when molded with the final article is said to have improved surface characteristics, even a Class A surface, a lower coefficient of thermal expansion, as well as other improved properties, particularly impact as determined by Dynatup testing. The mineral additive can range from 5 to 70 weight percent. The polymer portion can be a copolyetherimide ester, a copolyether ester, an aromatic polycarbonate, a rubber modified homopolymer, or copolymer of a vinyl aromatic monomer, a polyphenylene ether, a polyamide, and blends thereof or blends with other polymers. The preferred mineral additive is said to be calcium meta silicate, also known as wollastonite.

Ishihata et al., in U.S. Pat. No. 6,362,269, describe a resin composition comprising 100 parts by weight of a resin component selected from (a) an aromatic polycarbonate resin (A-1 component) obtained by melt polymerization and, when measured for fluorescent spectrum at an exciting wavelength of 320 nm, having a relative fluorescence intensity of 4 x 10⁻³ or less at 465 nm relative to a standard substance, (b) a resin mixture of the A-1 component and a styrene-based resin (A-2 component), and (c) a resin mixture of the A-1 component and an aromatic polyester resin (A-3 component), and 5 to 200 parts by weight of a reinforcing filler. This resin composition is said to give a molded article superior in wet heat fatigue and various physical properties.

None of these patents provide a filled polycarbonate composition capable of achieving a 5V-A flammability rating at 2.3mm thickness. Thus, a need continues to exist in the art for such a composition which will retain good surface quality.

WO 02/059204 A2 discloses a flame retardant composition comprising polycarbonate, styrene-based resin, ABS, and wollastonite particles.

### SUMMARY OF THE INVENTION

In one embodiment of the invention, the inventive composition comprises, 50.0 wt.% to 65.0 wt.% polycarbonate, 5.0 wt.% to 15.0 wt.% styrene-acrylonitrile copolymer, 5.0 wt.% to 15.0 wt.% acrylonitrile-butadiene-styrene copolymer, 0.5 wt.% to 5.0 wt.% glass fiber, 0.5 wt.% to 5.0 wt.% alumina particles, and 0.5 wt.% to 5.0 wt.% wollastonite particles, wherein the composition exhibits a flame-retardance rating of UL 94 5V-A at 2.3 mm thickness or less and wherein the wt.%, all instances, is based on total weight of the composition.

In yet another embodiment of the invention, the inventive composition comprises, 40.0 wt.% to 70.0 wt.% polycarbonate, 5.0 wt.% to 30.0 wt.% vinyl copolymer, greater than 0 wt.% to 10.0 wt.% glass fiber, greater than 0 wt.% to 10.0 wt. % alumina particles, and greater than 0 wt.% to 10.0 wt.% wollastonite particles, wherein the total amount of glass fiber, alumina, and wollastonite is no greater than 25% of the composition by weight, and wherein the composition exhibits a flame-retardance rating of UL 94 5V-A at 2.3 mm thickness or less and wherein the wt.%, all instances, is based on total weight of the composition. The inventive compositions retain good surface quality.

### DETAILED DESCRIPTION OF THE INVENTION

The present invention will now be described for purposes of illustration and not limitation. Except in the operating examples, or where otherwise indicated, all numbers expressing quantities, percentages, and so forth in the specification are to be understood as being modified in all instances by the term "about."

Any numerical range recited in this specification is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited in this specification is intended to include all lower numerical limitations subsumed therein and any minimum numerical limitation recited in this specification is intended to include all higher numerical limitations subsumed therein.

Reference throughout this specification to "various non-limiting embodiments," "certain embodiments," or the like, means that a particular feature or characteristic may be included in an embodiment. Thus, use of the phrase "in various non-limiting embodiments," "in certain embodiments," or the like, in this specification does not necessarily refer to a common embodiment, and may refer to different embodiments. Further, the particular features or characteristics may be combined in any suitable manner in one or more embodiments. Thus, the particular features or characteristics illustrated or described in connection with various or certain embodiments may be combined, in whole or in part, with the features or characteristics of one or more other embodiments without limitation. Such modifications and variations are intended to be included within the scope of the present specification.

Various non-limiting embodiments disclosed and described in this specification are directed, in part, to polycarbonate compositions, and to methods of increasing the flame retardancy of polycarbonate compositions.

The inventive composition exhibiting a flame-retardance rating of UL 94 V-0 at 1.5 mm thickness or less, and/or a flame-retardance rating of UL 94 5V-A at 2.3 mm thickness or less comprises:
(A) 40.0 wt.% to 70.0 wt.% polycarbonate;
(B) 5.0 wt.% to 30.0 wt.% vinyl copolymer;
(C) greater than zero to 10.0 wt.% glass fiber;
(D) greater than zero to 7.0 wt.% alumina particles;
(E) greater than zero to 10.0 wt.% wollastonite particles; and
(F) zero to 50.0 wt.% additives
wherein the wt.%, all instances, is based on the total composition weight.

### Polycarbonate

Non-limiting and suitable polycarbonates may comprise, for example, homopolycarbonates, copolycarbonates, branched polycarbonates, polyester carbonates, and mixtures of any thereof. The polycarbonates may have a weight average molecular weight of 10,000 g/mol to 200,000 g/mol, and in various non-limiting embodiments, of 20,000 g/mol to 80,000 g/mol, 15,000 g/mol to 80,000 g/mol, or 24,000 g/mol to 32,000 g/mol. The polycarbonates may be thermoplastic polycarbonates. The thermoplastic polycarbonates may have a melt flow rate (determined according to ASTM D1238-04: *Standard Test Method for Melt Flow Rates of Thermoplastics by Extrusion Plastometer)* at 300°C of about 1 g/10 min to about 85 g/10 min, and in various non-limiting embodiments, of about 2 g/10 min to 30 g/10 min.

The polycarbonates may be prepared, for example, by the known diphasic interface process from a carbonic acid derivative such as phosgene and a dihydroxy compound by polycondensation (*see, e.g.*, German Offenlegungsschriften Numbers 2,063,050; 2,063,052; 1,570,703; 2,211,956; 2,211,957; 2,248,817; 2,232,877; 2,703,376; 2,714,544, 3,000,610; 3,832,396; 3,077934; and Schnell, "Chemistry and Physics of Polycarbonates," Interscience Publishers, New York, N.Y., 1964).

In various non-limiting embodiments, the polycarbonates may comprise aromatic polycarbonates. Aromatic polycarbonates may be prepared, for example, by reaction of diphenols with carbonic acid halides, such as phosgene, and/or with aromatic dicarboxylic acid dihalides, such as benzenedicarboxylic acid dihalides, by the interfacial process, optionally using chain terminators, for example, monophenols, and optionally using branching agents that are trifunctional or more than trifunctional, for example, triphenols or tetraphenols. Production of aromatic polycarbonates via a melt polymerization process by reaction of diphenols with, for example, diphenyl carbonate is likewise possible.

In certain embodiments, the polycarbonates may be prepared from dihydroxy compounds that conform to the structural formula (1) or (2): 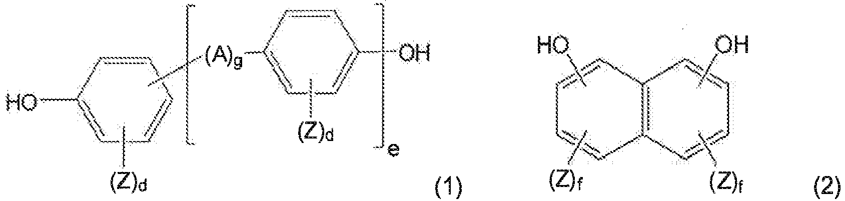 wherein A denotes an alkylene group with 1 to 8 carbon atoms, an alkylidene group with 2 to 8 carbon atoms, a cycloalkylene group with 5 to 15 carbon atoms, a cycloalkylidene group with 5 to 15 carbon atoms, a carbonyl group, an oxygen atom, a sulfur atom, -SO-, -SO₂-, or a radical conforming to formula (3): 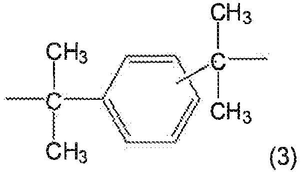 wherein e and g both denote the number 0 to 1; Z denotes F, Cl, Br or C₁-C₄-alkyl, and if several Z radicals are substituents in one aryl radical, they may be identical or different from one another; d denotes an integer of from 0 to 4; and f denotes an integer of from 0 to 3.

Non-limiting dihydroxy compounds that may be used to produce polycarbonates include, for example, hydroquinone; resorcinol; bis-(hydroxyphenyl)-alkanes; bis-(hydroxyphenyl)-ethers; bis-(hydroxyphenyl)-ketones; bis-(hydroxyphenyl)-sulfoxides; bis-(hydroxyphenyl)-sulfides; bis-(hydroxyphenyl)-sulfones; 2,2,4-trimethylcyclohexyl-1,1-diphenol; α,α'-bis-(hydroxyphenyl)-diisopropylbenzenes; nuclear-alkylated derivatives thereof; and combinations of any thereof. Additional aromatic dihydroxy compounds that may be used to produce polycarbonates are described, for example, in U.S. Pat. Nos. 3,028,356; 2,999,835; 3,148,172; 2,991,273; 3,271,367; and 2,999,846.

In certain embodiments, polycarbonates may be prepared from one or more bisphenol compounds. For example, polycarbonates may be prepared from bisphenol compounds including, but not limited to, 2,2-bis-(4-hydroxyphenyl)-propane (bisphenol A); 2,4-bis-(4-hydroxyphenyl)-2-methylbutane; 1,1-bis-(4-hydroxyphenyl)-cyclohexane; α,α'-bis-(4-hydroxyphenyl)-p-diisopropylbenzene; 2,2-bis-(3-methyl-4-hydroxyphenyl)-propane; 2,2-bis-(3-chloro-4-hydroxyphenyl)-propane; bis-(3,5-dimethyl-4-hydroxyphenyl)-methane; 2,2-bis-(3,5-dimethyl-4-hydroxyphenyl)-propane; bis-(3,5-dimethyl-4-hydroxyphenyl)-sulfide; bis-(3,5-dimethyl-4-hydroxyphenyl)-sulfoxide; bis-(3,5-dimethyl-4-hydroxyphenyl)-sulfone; dihydroxybenzophenone; 2,4-bis-(3,5-dimethyl-4-hydroxyphenyl)-cyclohexane; α,α'-bis-(3,5-dimethyl-4-hydroxyphenyl)-p-diisopropylbenzene; 2,2,4-trimethyl cyclohexyl-1,1-diphenol; 4,4'-sulfonyl diphenol; 2,2-bis-(3,5-dibromo-4-hydroxyphenyl)-propane; and combinations of any thereof.

In various non-limiting embodiments, polycarbonates may be prepared from at least one of 2,2,-bis-(4-hydroxyphenyl)-propane; 2,2-bis-(3,5-dibromo-4-hydroxyphenyl)-propane; 2,2-bis-(3,5-dimethyl-4-hydroxyphenyl)-propane; 2,2,4-trimethyl cyclohexyl-1,1-diphenol; and 1,1-bis-(4-hydroxyphenyl)-cyclohexane. The polycarbonates may include residue units in their structure derived from one or more bisphenol compounds.

In addition, polycarbonate resins may be used. The polycarbonate resins may include, for example, phenolphthalein-based polycarbonates, copolycarbonates, and terpolycarbonates, such as are described in U.S. Pat. Nos. 3,036,036 and 4,210,741.

In certain embodiments, branched polycarbonates may be used. Branched polycarbonates may be produced, for exampled, by reacting via polycondensation a carbonic acid derivative such as phosgene, one or more dihydroxy compounds, and one or more polyhydroxyl compounds that function as branching agents. Branching agents that may be used include, for example, phenols that are trifunctional or more than trifunctional, such as phloroglucinol; 4,6-dimethyl-2,4,6-tri-(4-hydroxyphenyl)-hept-2-ene; 4,6-dimethyl-2,4,6-tri-(4-hydroxyphenyl)-heptane; 1,3,5-tri-(4-hydroxyphenyl)-benzene; 1,1,1-tri-(4-hydroxyphenyl)-ethane; tri-(4-hydroxyphenyl)-phenylmethane; 2,2-bis[4,4-bis-(4-hydroxyphenyl)-cyclohexyl]-propane; 2,4-bis-(4-hydroxyphenyl-isopropyl)-phenol; tetra-(4-hydroxyphenyl)-methane; 2,6-bis-(2-hydroxy-methyl-benzyl)-4-methyl-phenol; 2-(4-hydroxyphenyl)-2-(2,4-dihydroxyphenyl)-propane; tetra-(4-[4-hydroxyphenyl-isopropyl]-phenoxy)-methane; 1,4-bis-[4',4"-dihydroxytriphenyl)-methyl]-benzene; combinations of any thereof. Multifunctional phenols may be used in amounts of from 0.01 mol % to 1.0 mol % based on the total amount of phenols employed. Multi-functional phenolic branching agents may be introduced with diphenols into reaction mixtures during polycarbonate synthesis.

In various non-limiting embodiments, at least one polyhydroxyl compound may be reacted with a carbonic acid derivative and at least one dihydroxy compound in relatively small quantities, such as, for example, 0.05 mol % to 2.00 mol % (relative to the dihydroxy compounds present in the reaction mixture). Branched polycarbonates of this type are described, for example, in German Offenlegungsschriften Nos. 1,570,533; 2,116,974; and 2,113,374; British Patent Nos. 885,442 and 1,079,821; and U.S. Pat. No. 3,544,514.

Non-limiting examples of polyhydroxyl compounds that may be used in various embodiments to prepare branched polycarbonates include, but are not limited to, phloroglucinol; 4,6-dimethyl-2,4,6-tri-(4-hydroxyphenyl)-heptane; 1,3,5-tri-(4-hydroxyphenyl)-benzene; 1,1,1-tri-(4-hydroxyphenyl)-ethane; tri-(4-hydroxyphenyl)-phenylmethane; 2,2-bis-[4,4-(4,4'-dihydroxydiphenyl)]-cyclohexyl-propane; 2,4-bis-(4-hydroxy-1-isopropylidine)-phenol; 2,6-bis-(2'-dihydroxy-5'-methylbenzyl)-4-methyl-phenol; 2,4-dihydroxybenzoic acid; 2-(4-hydroxyphenyl)-2-(2,4-dihydroxy-phenyl)-propane; 1,4-bis-(4,4'-dihydroxy-triphenylmethyl)-benzene; and combinations of any thereof. Non-limiting examples of other polyfunctional compounds that may be used to prepare branched polycarbonates include, but are not limited to, 2,4-dihydroxybenzoic acid; trimesic acid; cyanuric chloride; 3,3-bis-(4-hydroxyphenyl)-2-oxo-2,3-dihydroindole; and combinations of any thereof.

Chain terminators that may be used for the preparation of polycarbonates include, for example, phenol; p-chlorophenol; p-tert-butylphenol; 2,4,6-tribromophenol; and combinations of any thereof. Chain terminators that may also be used for the preparation of polycarbonates include alkylphenols such as, for example, 4-[2-(2,4,4-trimethylpentyl)]-phenol; 4-(1,3-tetramethylbutyl)-phenol; 3,5-di-tert-butylphenol; p-iso-octylphenol; p-tert-octylphenol; p-dodecylphenol; 2-(3,5-dimethylheptyl)-phenol; 4-(3,5-dimethylheptyl)-phenol; and combinations of any thereof. The amount of chain terminators employed may be between 0.5 mol percent and 10 mol percent, based on the total amount of phenols and diphenols employed in the polycarbonate synthesis.

Polyester carbonates may be prepared, for example, by co-reacting a carbonic acid derivative such as phosgene, a dihydroxy compound, and a dicarboxylic acid dihalides. Examples of suitable dicarboxylic acid dihalides include, for example, the diacid dichlorides of isophthalic acid; terephthalic acid; diphenyl ether 4,4'-dicarboxylic acid; and of naphthalene-2,6-dicarboxylic acid. Mixtures of any of these dicarboxylic acid dihalides are also suitable. For example, mixtures of the diacid dichlorides of isophthalic acid and of terephthalic acid in a ratio of between 1:20 and 20:1, or any sub-range subsumed therein, may be employed.

Branching agents that may be used to produce branched polyester carbonates include, for example, carboxylic acid chlorides that are trifunctional or more than trifunctional, such as trimesic acid trichloride; cyanuric acid trichloride; 3,3',4,4'-benzophenone-tetracarboxylic acid tetrachloride; 1,4,5,8-naphthalenetetracarboxylic acid tetrachloride; pyromellitic acid tetrachloride; or combinations of any thereof. Carboxylic acid chlorides may be used in amounts of from 0.01 mol % to 1.0 mol % based on the total amount of carboxylic acid chlorides employed. Multi-functional acid chloride branching agents may be introduced with acid dichlorides into reaction mixtures during polyester carbonate synthesis.

Examples of chain terminators suitable for the preparation of polyester carbonates include, in addition to the monophenols already mentioned, chlorocarbonic acid esters thereof and the acid chlorides of aromatic monocarboxylic acids, which can optionally be substituted by C₁-alkyl to C₂₂-alkyl groups or by halogen atoms, and aliphatic C₂- to C₂₂-monocarboxylic acid chlorides. The amount of chain terminators in each case may be 0.1 mol % to 10 mol %, based on the moles of diphenol in the case of the phenolic chain terminators and on the moles of dicarboxylic acid dichloride in the case of monocarboxylic acid chloride chain terminators.

The content of carbonate structural units in a polyester carbonate may vary. For example, the content of carbonate groups may be up to 100 mol %, and in various embodiments, up to 80 mol % or up to 50 mol %, based on the sum of ester groups and carbonate groups. Both the ester and the carbonate content of a polyester carbonate can be present in the polycondensate molecule in the form of blocks or in random distribution.

In addition to general polycondensation processes, other reaction processes that may be used to prepare polycarbonates include, for example, transesterification, modified polycondensation in a homogeneous phase, and interfacial polycondensation. Non-limiting examples of these and other processes for producing polycarbonates are described in U.S. Pat. Nos. 3,028,365; 2,999,846; 3,153,008; 2,991,273; and 3,912,688.

The reactants described above for the production of polycarbonates may be employed in any suitable reaction mixture to produce homopolycarbonates, copolycarbonates, branched polycarbonates, or polyester carbonates. The resulting polycarbonate products may be used in polycarbonate compositions by themselves or in any suitable mixture.

In various non-limiting embodiments, commercially-available polycarbonate resins may be used in polycarbonate compositions. Non-limiting examples of suitable polycarbonate resins include, for example, the bisphenol-based polycarbonate resins available from Bayer MaterialScience under the MAKROLON name. Additional polycarbonate resins that may be used in various non-limiting embodiments are described, for example, in U.S. Pat. Nos. 3,030,331; 3,169,121; 3,395,119; 3,729,447; 4,255,556; 4,260,731; 4,369,303; 4,714,746; 5,693,607 and in U.S. Patent Application Publications Nos. 2007/0123634; 2008/0132617; 2009/008516; 2010/0160508; and 2011/0003918.

Non-limiting embodiments include a composition exhibiting a flame-retardance rating of UL 94 V-0 at 1.5 mm thickness or less, and/or a flame-retardance rating of UL 94 5V-A at 2.3 mm thickness or less may comprise 40.0 wt.% to 70.0 wt.% polycarbonate, more preferably, 50.0 wt.% to 65.0 wt.%, wherein the wt.%, all instances, is based on total composition weight.

### Vinyl copolymer

Non-limiting and suitable vinyl copolymers may comprise thermoplastic copolymers of two or more monomers selected from the group consisting of vinylaromatic monomers, vinyl cyanide monomers (*e.g*., unsaturated nitrile monomers), (meth)acrylic acid (C₁-C₈)-alkyl ester monomers, unsaturated carboxylic acid monomers, derivatives (*e.g*., anhydrides and imides) of unsaturated carboxylic acid monomers, diene monomers (*e.g.*, butadiene, isoprene), and combinations of any thereof.

In various non-limiting embodiments, a vinyl copolymer may comprise 50 wt.% to 99 wt.% of vinylaromatic monomer and/or substituted vinylaromatic monomer, and 1 wt.% to 50 wt. % of vinyl cyanide monomer and/or unsaturated carboxylic acid monomer (and derivatives thereof), based on total monomer weight. In various non-limiting embodiments, a vinyl copolymer may comprise 60 wt.% to 80 wt.% of vinylaromatic monomer and/or substituted vinylaromatic monomer, and 20 wt.% to 40 wt.% of vinyl cyanide monomer and/or unsaturated carboxylic acid monomer (and derivatives thereof), based on total monomer weight. Examples of suitable vinylaromatic monomers and substituted vinylaromatic monomers include, for example, styrene, α-methylstyrene, p-methylstyrene, and p-chlorostyrene. Examples of suitable vinyl cyanide monomers include, for example, acrylonitrile and methacrylonitrile. Examples of suitable unsaturated carboxylic acid monomers (and derivatives thereof) include, for example, (meth)acrylic acid (C₁-C₈)-alkyl ester monomers (*e.g.*, methyl methacrylate, ethyl methacrylate, n-butyl acrylate, and/or t-butyl acrylate), maleic acid, and/or derivatives of maleic acid (*e.g*., maleic anhydride and N-phenylmaleimide).

Vinyl copolymers may be produced, for example, by free-radical polymerization, such as in emulsion, suspension, solution, or bulk polymerization. Vinyl copolymers may have average molecular weights Mw (weight-average, determined by light scattering or sedimentation) of between 15,000 g/mol and 200,000 g/mol.

In certain embodiments, a vinyl copolymer may comprise a graft copolymer comprising 5 wt.% to 95 wt.% of at least one vinyl monomer on 5 wt.% to 95 wt.% of at least one graft base comprising a diene rubber, based on total weight of the vinyl copolymer.

The at least one vinyl monomer may include the vinyl monomers described above, such as, for example, vinylaromatic monomers (*e.g*., α-methylstyrene, p-methylstyrene, and p-chlorostyrene), vinyl cyanide monomers (*e.g*., acrylonitrile and methacrylonitrile), (meth)acrylic acid (C₁-C₈)-alkyl ester monomers (*e.g*., methyl methacrylate, ethyl methacrylate, n-butyl acrylate, and/or t-butyl acrylate), unsaturated carboxylic acid monomers (*e.g*., maleic acid), derivatives of unsaturated carboxylic acid monomers (*e*.*g*., maleic anhydride and N-phenylmaleimide), and combinations of any thereof.

The at least one graft base may comprise at least one diene rubber. As used herein, the term "diene rubber" refers to polymers and copolymers comprising butadiene and/or isoprene monomer residues alone or in combination with additional residues of copolymerized ethylenically unsaturated monomers. In various non-limiting embodiments, the diene rubber may be selected from the group consisting of butadiene rubber, isoprene rubber, copolymers of butadiene and isoprene, copolymers of butadiene and other copolymerizable ethylenically unsaturated monomers, copolymers of isoprene and other copolymerizable ethylenically unsaturated monomers, and copolymers of butadiene, isoprene, and other copolymerizable ethylenically unsaturated monomers, and combinations of any thereof.

In various non-limiting embodiments, a vinyl copolymer may comprise a graft copolymer comprising a reaction product of substituted or unsubstituted vinylaromatic monomer (*e.g*., α-methylstyrene, p-methylstyrene, and/or p-chlorostyrene), vinyl cyanide monomer (*e.g*., acrylonitrile and/or methacrylonitrile), and diene rubber (*e.g*., butadiene rubber, isoprene rubber, and/or copolymers comprising butadiene rubber and/or isoprene rubber). In various non-limiting embodiments, a vinyl copolymer may comprise a graft copolymer as described in U.S. Patent Application Publication No. 2011/0003918, Component C.

In certain embodiments, a graft base comprising a diene rubber may have an average particle size (d₅₀ value) of from 0.05 µm to 10 µm, or any sub-range subsumed therein, such as, for example, 0.1 µm to 5 µm or 0.2 µm to 1 µm. The average particle size d₅₀ is the log-normal distribution mass median diameter. The mass median diameter d₅₀ is considered to be the average particle diameter by mass and is the diameter above and below which lies 50 wt. % of the particles in a sample. The mass median diameter d₅₀ can be determined by means of ultracentrifuge measurement using standard practices. The graft base particles may function as a core particle to which a shell is grafted, the shell comprising a copolymerization product of at least one vinyl monomer, such as, for example, vinylaromatic monomers (*e.g*., α-methylstyrene, p-methylstyrene, and p-chlorostyrene), vinyl cyanide monomers (*e.g.*, acrylonitrile and methacrylonitrile), (meth)acrylic acid (C₁-C₈)-alkyl ester monomers (*e.g*., methyl methacrylate, ethyl methacrylate, n-butyl acrylate, and/or t-butyl acrylate), unsaturated carboxylic acid monomers (*e.g*., maleic acid), derivatives of unsaturated carboxylic acid monomers (*e.g*., maleic anhydride and N-phenylmaleimide), and combinations of any thereof.

A vinyl copolymer may comprise a graft copolymer comprising acrylonitrile-butadiene-styrene (ABS) copolymers (*e.g*., emulsion, bulk, and suspension ABS), which are described, for example, in U.S. Pat. No. 3,644,574; G.B. Patent No. 1,409,275); and Ullmanns, "Enzyklopadie der Technischen Chemie," vol. 19 (1980). An ABS copolymer may comprise a core-shell structure, wherein a SAN component forms the shell (also called casing) and a butadiene rubber component forms the core. ABS copolymers comprising a core-shell structure are described, for example, in Ullmann's Encyclopedia of Industrial Chemistry, VCH-Verlag, vol. A21, 1992.

In certain embodiments, a vinyl copolymer may comprise a graft copolymer prepared in an emulsion polymerization process that contains a diene rubber graft base having an average particles size (d₅₀ value) of from 0.15 µm to 0.4 µm, 0.2 µm to 0.4 µm, or 0.25 µm to 0.35 µm. Graft polymers of this type may be prepared in an emulsion polymerization process by redox initiation with an initiator system of organic hydroperoxide and ascorbic acid in accordance with U.S. Pat. No. 4,937,285.

Grafting monomers are not necessarily grafted completely on to a graft base during a grafting polymerization reaction; therefore, vinyl copolymer comprising graft copolymers are also understood as including those products that are produced by copolymerization of the grafting monomer(s) in the presence of the graft base and are also obtained during the working up.

In various non-limiting embodiments, a vinyl copolymer may comprise a graft copolymer that is prepared in a bulk, solution, or bulk-suspension polymerization process and may have a diene rubber core content of from 16 wt.% to 25 wt.% or 17 wt.% to 19 wt.%. The vinyl copolymer also may have a grafted shell that contains, in each case based on the total weight of monomers of the grafted shell, 22 wt.% to 27 wt.% of acrylonitrile, and 73 wt.% to 78 wt.% of styrene. The graft copolymer may comprise a butadiene/styrene block copolymer rubber as the graft base and a shell of styrene and acrylonitrile copolymer (SAN). A vinyl copolymer may comprise a copolymer of styrene and acrylonitrile (SAN). In various non-limiting embodiments, a vinyl copolymer may comprise a copolymer of acrylonitrile, butadiene, and styrene (ABS). In various non-limiting embodiments, a vinyl copolymer may comprise a combination of SAN and ABS.

In certain embodiments, a composition exhibiting a flame-retardance rating of UL 94 V-0 at 1.5 mm thickness or less, and/or a flame-retardance rating of UL 94 5V-A at 2.3 mm thickness or less may comprise (in wt. % based on total composition weight) 5.0 wt.% to 30.0 wt.% vinyl copolymer, more preferably10.0 wt.% to 20.0 wt.%, most preferably 16.0 wt.% to 20.0 wt.% vinyl copolymer. For example, a composition may comprise 5.0 wt.% to 15.0 wt.% SAN and/or 5.0 wt.% to 15.0 wt.% ABS, wherein the wt.%, all instances, is based on total composition weight.

### Glass fiber

In various non-limiting embodiments, polycarbonate compositions may comprise glass fibers, such as, for example, continuous strands (rovings), long glass fibers, chopped glass strands, and combinations of any thereof. Glass fibers may comprise E-glass fibers, A-glass fibers, or C-glass fibers. The diameter of the glass fibers may be 5 µm to 25 µm, or any sub-range subsumed therein, such as, for example, 6 µm to 20 µm or 7 µm to 15 µm. Long glass fibers may have a length of 5 mm to 50 mm, or any sub-range subsumed therein, such as, for example, 5 mm to 30 mm or 7 mm to 25 mm. Long glass fibers are described, for example, in WO-A 2006/040087. Chopped glass strands may have an average length of at least about 50 µm and, in various non-limiting embodiments, at least 70 weight percent of the glass fibers in a sample of chopped glass strands used in polycarbonate compositions may have a length of at least about 60 µm.

Glass fibers may be sized or non-sized glass fibers. As used herein in connection with glass fibers, the term "size" refers to chemical compositions that are used to coat the surface of glass fibers before incorporation into a polycarbonate composition. A size fills pores in glass fiber and provides a covering or glaze that protects and lubricates glass fibers. A size may also modify the surface properties of glass fibers and may function to improve compatibility of the glass fiber and the polymeric matrix into which the glass fiber is incorporated.

Non-limiting size compositions may comprise an epoxy-based polymer and, optionally, an adhesion promoter or other non-epoxy-based polymer. For example, a size composition may comprise 50 wt.% to 100 wt.% of an epoxy-based polymer and 0 wt.% to 50 wt.% of an adhesion promoter and/or non-epoxy-based polymer, based on total weight of the size composition. A size composition may comprise an epoxy-based polymer and an adhesion promoter in any sub-range subsumed therein, for example, 70 wt.% to 100 wt.% or 80 wt.% to 100 wt.% of an epoxy-based polymer, and 0 wt.% to 30 wt.% or 0 wt.% to 20 wt.% of an adhesion promoter and/or non-epoxy-based polymer, based on total weight of the size composition. In various non-limiting embodiments, a size composition consists exclusively of epoxy-based polymer and optional adhesion promoter (*i.e*. the size composition is free from other non-epoxy-based polymers).

In various non-limiting embodiments, a size composition may comprise an epoxy-based polymer comprising an epoxy resin, an epoxy resin ester, an epoxy resin polyurethane, or a combination of any thereof. For example, an epoxy-based polymer may comprise an epoxy resin comprising a reaction product of epichlorohydrin and an aromatic alcohol having at least two hydroxyl groups, such as, for example, bisphenol A. Optional non-epoxy-based polymers may include, for example, polyurethanes, polyolefins, acrylate-containing polymers, styrene-containing polymers, polyamides, and combination of any thereof.

Non-limiting size compositions may comprise an adhesion promoter comprising a silane compound. Suitable silane compounds include, for example, silanes comprising at least one functional group selected from the group of an amino group, epoxy group, carboxylic acid group, vinyl group, mercapto group, and combinations of any thereof. These functional groups may function to bind to an epoxy-based polymer comprising a size composition. Silanes may also comprise one to three alkoxy groups that function to bind to glass fiber. In this manner, the silane improves adhesion of an epoxy-based polymer to the surface of glass fiber. Examples of suitable silanes include, but are not limited to, vinyltrichlorosilane; vinyltriethoxysilane; vinyltrimethoxysilane; γ-methacryloxypropyltrimethoxysilane; β-(3,4-epoxycyclohexyl)ethyltrimethoxysilane; γ-glycidoxypropyltrimethoxysilane; N-β-(aminoethyl)-γ-aminopropyltrimethoxysilane; γ-aminopropyltriethoxysilane; N-phenyl-γ-aminopropyltrimethoxysilane; γ-mercaptopropyltrimethoxysilane; γ-chloropropyltrimethoxysilane; and combinations of any thereof.

In certain embodiments, a size composition comprising an epoxy-based polymer and, optionally, an adhesion promoter may be used in an amount such that the carbon content of the size composition is 0.1 wt.% to 1 wt.%, based on the total weight of the glass fibers and the size composition. A size composition may be used in an amount such that the carbon content of the size composition is 0.2 wt.% to 0.8 wt.% or 0.3 wt.% to 0.7 wt.%, based on the total weight of the glass fibers and the size composition.

In various non-limiting embodiments, a composition exhibiting a flame-retardance rating of UL 94 V-0 at 1.5 mm thickness or less, and/or a flame-retardance rating of UL 94 5V-A at 2.3 mm thickness or less may comprise greater than zero wt.% to 10.0 wt.% glass fiber, more preferably 0.5 wt.% to 5.0 wt.%, particularly preferably, 1.0 wt.% to 3.0 wt.%, most preferably 1.0 wt.% to 1.5 wt.% glass fiber, wherein the wt.%, all instances, is based on total composition weight including the weight of any sizing composition in the glass fiber weight.

### Alumina

In various non-limiting embodiments, polycarbonate compositions may comprise alumina particles. As used herein, the term "alumina" refers to the various mineral forms of aluminum oxide/hydroxide. The term alumina includes, for example, corundum (Al₂O₃), boehmite (γ-AlO(OH)), diaspore (α-AlO(OH)), and gibbsite (Al(OH)₃) (*i.e*., bayerite, doyleite, and nordstrandite), and combinations of any thereof. The term alumina also includes the various phases and polymorphic forms of aluminum oxide/hydroxide.

Non-limiting polycarbonate compositions may comprise alumina particles having a particle size (d₅₀) of less than 150 µm, less than 100 µm, or less than 50 µm. For example, alumina particles may have a particle size (d₅₀) in the range of 25 µm to 150 µm, or any sub-range subsumed therein, such as, for example, 25 µm to 100 µm, 25 µm to 75 µm, 30 µm to 70 µm, or 30 µm to 50 µm. Non-limiting examples of suitable alumina particles include, for example, the alumina particles available from Sasol North America Inc., Houston, Texas, USA, under the names PURAL, CATAPAL, DISPERAL, DISPAL, PURALOX, CATALOX, and CERALOX.

Non-limiting embodiments include a composition exhibiting a flame-retardance rating of UL 94 V-0 at 1.5 mm thickness or less, and/or a flame-retardance rating of UL 94 5V-A at 2.3 mm thickness or less may comprise greater than zero wt.% to 7.0 wt.% alumina particles, more preferably 1.0 wt.% to 5.0 wt.%, particularly preferably 1.0 wt.% to 3.0 wt.%, most preferably 2.0 wt.% to 3.0 wt.% alumina particles, wherein the wt.%, all instances, is based on total composition weight.

### Wollastonite

In various non-limiting embodiments, polycarbonate compositions may comprise wollastonite particles. As used herein, the term "wollastonite" refers to the various mineral forms of calcium silicate (CaSiO₃). The term wollastonite includes, for example, purified wollastonite, which includes approximately 48 % calcium oxide (CaO) and 52 % silicon dioxide (SiO₂) by weight, and substituted forms wherein relatively small amounts of iron, manganese, and/or magnesium substitute for calcium in the mineral form.

Non-limiting polycarbonate compositions may comprise wollastonite particles having a particle size (d₅₀) of less than 100 µm, less than 50 µm, or less than 25 µm. For example, wollastonite particles may have a particle size
(d₅₀) in the range of 5 µm to 50 µm, or any sub-range subsumed therein, such as, for example, 5 µm to 30 µm, 5 µm to 25 µm, 10 µm to 20 µm, or 10 µm to 15 µm. Wollastonite particles may have an acicular morphology with an aspect ratio (L:D) in the range of 3:1 to 15:1 or any sub-range subsumed therein, such as, for example, 4:1 to 15:1 or 9:1 to 15:1.

Non-limiting examples of suitable wollastonite include, for example, the wollastonite available from NYCO Minerals, Inc., Willsboro, NY, USA, under the names NYGLOS and NYAD.

In various non-limiting embodiments, a composition exhibiting a flame-retardance rating of UL 94 V-0 at 1.5 mm thickness or less, and/or a flame-retardance rating of UL 94 5V-A at 2.3 mm thickness or less may comprise greater than zero wt.% to 10.0 wt.% wollastonite particles, more preferably 0.1 wt.% to 7.0 wt.%, most preferably 0.5 wt.% to 2.0 wt.% wollastonite particles, wherein the wt.%, all instances, is based on total composition weight.
It has been surprisingly and unexpectedly found that a combination of glass fiber, alumina particles, and wollastonite particles function synergistically as fillers to increase the flame-retardance of compositions comprising blends of polycarbonate and vinyl copolymer. For example, in various non-limiting embodiments, a polycarbonate composition may comprise a polycarbonate, a vinyl copolymer, a glass fiber, alumina particles, and wollastonite particles, wherein the polycarbonate composition exhibits a flame-retardance rating of UL 94 V-0 at 1.5 mm thickness or less. In various non-limiting embodiments, a polycarbonate composition may comprise a polycarbonate, a vinyl copolymer, a glass fiber, alumina particles, and wollastonite particles, wherein the polycarbonate composition exhibits a flame-retardance rating of UL 94 5V-A at 2.3 mm thickness or less.

In various non-limiting embodiments, a composition exhibiting a flame-retardance rating of UL 94 V-0 at 1.5 mm thickness or less, and/or a flame-retardance rating of UL 94 5V-A at 2.3 mm thickness or less may comprise greater than zero wt.% to 25.0 wt.% of glass fiber, alumina particles, and wollastonite particles, more preferably 1.0 wt.% to 5.0 wt.%, particularly preferably 2.0 wt.% to 3.0 wt.%, most preferably 1.5 wt.% to 2.0 wt.%, wherein the wt.%, all instances, is based on total composition weight.

### Additional additives

Polycarbonate compositions in accordance with the various embodiments described in this specification may contain additional optional additives known to those in the art, such as, for example, antioxidants, UV absorbers, light absorbers, peroxide scavengers, metal deactivators, fillers and reinforcing agents, impact modifiers, lubricants, plasticizers, optical brighteners, pigments, dyes, colorants, additional flame-retarding agents, anti-static agents, mold-release agents, blowing agents, and combinations of any thereof. For example, a composition may comprise one or more flame retardants (*e.g*., organic phosphorus or halogen compounds, such as bisphenol A-based oligophosphates, tetrabromobisphenol A carbonate oligomers, bisphenol A diphosphate, or other organic esters of phosphoric acid); anti-drip agents (*e.g*., fluorinated polyolefins such as PTFE, silicones, and aramid fibers); lubricants and mold release agents (*e.g*., pentaerythritol tetrastearate); antioxidants and stabilizers (*e.g.*, triphenylphosphine or the antioxidants/thermal stabilizers available under the IRGANOX name); nucleating agents; antistatic agents (*e.g.*, conductive carbon blacks, carbon fibers, carbon nanotubes, and organic antistatics such as polyalkylene ethers, alkylsulfonates, or polyamide-containing polymers); fillers and reinforcing materials other than glass fibers, alumina, and wollastonite (*e.g*., carbon fibers, talc, mica, or kaolin); dyes and pigments (*e*.*g*., titanium dioxide or iron oxide); impact modifiers (*e.g*., silicon rubbers and derivatives thereof such as the METABLEN products); and combinations of any thereof.

In certain embodiments, a composition exhibiting a flame-retardance rating of UL 94 V-0 at 1.5 mm thickness or less, and/or a flame-retardance rating of UL 94 5V-A at 2.3 mm thickness or less may comprise zero wt. % to 50.0 wt. % of additional additives, more preferably, 0.5 wt. % to 25.0 wt. % additives, wherein the wt.%, all instances, is based on total composition weight.

### Phosphorus-containing compounds

Polycarbonate compositions in various non-limiting embodiments may comprise phosphorus-containing compounds such as, for example, Component D described in U.S. Patent Application Publication No. 2011/0003918. In various non-limiting embodiments, polycarbonate compositions may also comprise polyalkylene terephthalates such as, for example Component E.2 described in U.S. Patent Application Publication No. 2011/0003918. In various non-limiting embodiments, polycarbonate compositions may comprise polytetrafluoroethylene-based anti-dripping agents such as those described, for example, in U.S. Patent Application Publication No. 2007/0123634 A1.

Non-limiting embodiments of the polycarbonate compositions described in this specification may be used as thermoplastic molding compositions. Thermoplastic molding compositions may be produced, for example, by mixing the respective components and melt-compounding and melt-extruding the mixture at temperatures of, for example, 200°C to 320°C, screw extruders. The mixing of the individual components may take place either successively or simultaneously, and either at about 20°C (ambient temperature) or at a higher temperature.

In certain embodiments, the production of polycarbonate compositions takes place in a twin screw extruder, wherein the polycarbonate component and the vinyl copolymer component are first melted and mixed, and then the glass fibers, alumina particles, and wollastonite particles are introduced into the melt mixture via a subsidiary extruder and dispersed therein.

In various non-limiting embodiments, a solid mixture or blend of polycarbonate and vinyl copolymer comprising dispersed glass fibers, alumina particles, and wollastonite particles may be granulated to form pellets and/or powder. The solid mixture or blend of polycarbonate resin and vinyl copolymer comprising dispersed glass fibers, alumina particles, and wollastonite particles may be granulated after melt compounding and/or melt extruding the mixture. The resulting thermoplastic polycarbonate molding compositions may be formed into various articles by a variety of techniques including, for example, injection molding, extrusion, rotation molding, blow molding, thermoforming, and the like.

The molding compositions may be used for the production of shaped articles of all kinds. Examples of shaped articles include, for example, films, sheets, profiles, all kinds of housing parts (*e.g*. for domestic appliances such as juice presses, coffee machines, mixers; for office equipment such as monitors, flat screens, notebooks, printers, copiers; pipes, electrical installation ducts, windows, doors and other profiles for the construction sector), interior finishing and exterior applications, electrical and electronic parts (*e.g*., switches, plugs, and sockets), and components for utility vehicles, particularly for the automobile sector. The molding compositions may also be suitable for the production of shaped articles or molded parts including, for example, interior fittings for rail vehicles, ships, aircraft, buses, and other motor vehicles; body parts for motor vehicles; housings for electrical appliances containing small transformers; housings for equipment for data processing and transfer; housings and claddings for medical equipment; massage equipment and housings therefore; toy vehicles for children; flat wall elements; housings for safety devices; thermally insulated transport containers; moldings for sanitary and bath equipment; covering grid plates for ventilation openings; and housings for garden equipment.

The non-limiting and non-exhaustive examples that follow are intended to further describe various non-limiting and non-exhaustive embodiments without restricting the scope of the embodiments described in this specification.

### EXAMPLES

In the Examples below, the following materials were used:

| | |
|---|---|
| PC-A | a homopolycarbonate based on bisphenol-A, having a melt flow rate of about 13 g/10 min. (300°C/1.2 kg load) per ASTM D-1238; |
| PC-B | a linear polycarbonate based on bisphenol-A having melt flow rate of about 6.0 cm³/10 min (300°C/1.2 kg load) per ASTM D-1238; |
| PC-C | a homopolycarbonate based on bisphenol A, having a melt flow rate of about 70 g/10 min (300°C/1.2 kg load) per ASTM D 1238; |
| PC-D | a 20% glass fiber-reinforced polycarbonate based on bisphenol-A having melt flow rate of about 3.5 g/10 min (300°C/1.2 kg load) per ASTM D 1238; |
| RELEASE AGENT | pentaerythritol tetrastearate; |
| SAN | styrene-acrylonitrile copolymer having a melt flow rate of 12 g/ 10 min. (230°C/3.8 kg load) per ASTM D 1238, commercially available from Ineos as LUSTRAN DN50; |
| ABS | ABS graft polymer of 40 parts by weight of a copolymer of styrene and acrylonitrile in a weight ratio of 73:27 on 60 parts by weight of crosslinked polybutadiene rubber produced by emulsion polymerization, with a mean particle diameter of d₅₀=0.3 µm; |
| STABILIZER A | an aromatic ester of phosphoric acid, commercially available from Rhein Chemie as THERMOSTABILIZER KL 3-2049; |
| STABILIZER B | an 80/20 weight percentage blend of tris(2,4-di-tert-butylphenyl) phosphate and octadecyl-3-(3,5-di-tert.butyl-4-hydroxyphenyl)-propionate, commercially available from CIBA as IRGANOX B900; |
| WOLLASTONITE | calcium silicate (CaSiO₃), commercially available from NYCO Minerals, Inc. as NYLGOS 8; |
| ALUMINA | aluminum oxide, commercially available from Sasol North America Inc. as PURAL 200; |
| GLASS FIBER | fiberglass, commercially available from LANXESS as CS 7928 having polymeric sizing containing silane; |
| TPP | triphenylphosphine; |
| IMPACT MODIFIER A | an emulsion based acrylonitrile/butadiene/styrene terpolymer impact modifier; |
| IMPACT MODIFIER B | a core-shell impact modifier with interpenetrating network of acrylate rubber and silicone rubber in a polymethyl methacrylate shell, commercially available from Mitsubushi Rayon, as METABLEN SX005; |
| FLAME RETARDANT A | PTFE encapsulated in SAN commercially available from Chemtura as BLENDEX 449; |
| FLAME RETARDANT B | bisphenol diphosphate; |
| FLAME RETARDANT C | phenoxy-terminated carbonate oligomer of tetrabromobisphenol A, commercially available from Chemtura as BC-52™; |
| FLAME RETARDANT D | bisphenol diphosphate phenyl ester, commercially available from Chemtura as REOFOS BAPP. |

The polycarbonate compositions of the Examples were prepared by melt extruding the components in a twin-screw extruder operated at 260°C, 200 RPM, and 15.00 kg/hour.

The UL 94 flame-retardance ratings were determined in accordance with UL 94: Standard for Tests for Flammability of Plastic Materials for Parts in Devices and Appliances, Fifth Edition, October 29, 1996, revised June 2, 2006. The UL 94 standard provides standardized and accepted (approved July 28, 2010 by the American National Standards Institute (ANSI)) test methods and rating scales to assess and compare the flame-retardancy properties of plastic materials. The UL 94 standard includes six tests: Horizontal Burning Test (HB); 20 mm Vertical Burning Test (V-0, V-1, V-2); 125 mm Vertical Burning Test (5VA, 5VB); Radiant Panel Flame Spread Test; Thin Material Vertical Burning Test (VTM-0, VTM-1, VTM-2); and Horizontal Burning Foamed Material Test (HBF, HF-1, HF-2). The embodiments described in this specification are characterized by flame-retardance ratings determined using the 20 mm Vertical Burning Test (V-0, V-1, V-2) and the 125 mm Vertical Burning Test (5VA, 5VB).

The UL 94 flame-retardance ratings determined in accordance with the UL 94 specification are reported with the thickness of the test specimen. Generally, thinner test specimens correlate with decreased flame-retardancy. Therefore, it is more difficult to achieve a UL 94 5V-A flame-retardance rating with relatively thinner test specimen of a given material.

### Examples 1-3

The amounts of the components present in the polycarbonate compositions are reported in Table I (in wt.%). The resulting polycarbonate compositions were used to mold bar specimens and plaque specimens that were tested for flame retardancy according to the UL 94 standard 125 mm Vertical Burning Test. The results of those tests are reported in Table I.

As can be appreciated by reference to Table III, the polycarbonate compositions comprising wollastonite particles did not exhibit flame-retardance ratings of UL 94 5V-A at 2.5 mm thickness or less. These results demonstrate that wollastonite alone does not have an observable effect on burn-though hole formation in polycarbonate compositions.

**Table I**

| **Component** | **Ex. 1** | **Ex. 2** | **Ex. 3** |
|---|---|---|---|
| PC-A | 55.70 | 58.88 | 60.87 |
| PC-B | 3.00 | 2.97 | 2.97 |
| SAN | 8.40 | 8.91 | 9.15 |
| IMPACT MODIFIER A | 8.40 | 8.91 | 9.15 |
| FLAME RETARDANT A | 1.00 | 0.99 | 0.99 |
| FLAME RETARDANT B | 13.00 | 12.86 | 12.87 |
| RELEASE AGENT | 0.40 | 0.40 | 0.40 |
| STABILIZER A | 0.10 | 0.10 | 0.10 |
| WOLLASTONITE | 10.00 | 6.00 | 3.50 |
| UL94 V rating (1.0 mm) | V-0 | V-0 | V-1 |
| UL94 V rating (1.5 mm) | V-0 | V-0 | V-0 |
| UL94 5V rating (2.0 mm) | 5V-B | 5V-B | 5V-B |
| UL94 5V rating (2.5 mm) | 5V-B | 5V-B | 5V-B |

### Examples 4-6

The amounts of the components present in the polycarbonate compositions are reported in Table II (in wt.%). The resulting polycarbonate compositions were used to mold bar specimens and plaque specimens having 2.3 mm thicknesses that were tested for flame retardancy according to the UL 94 standard 125 mm Vertical Burning Test. The results are reported in Table II.

As can be appreciated by reference to Table II, the polycarbonate compositions comprising 7.5 wt.% glass fibers (Ex. 4 and Ex. 5) exhibited flame-retardance ratings of UL 94 5V-A at 2.3 mm thickness. However, the plaque specimens molded with this relatively high amount of glass fiber also exhibited poor surface quality. The polycarbonate composition comprising 3.0 wt.% wollastonite particles, 1.0 wt.% alumina particles, and 3.0 wt.% glass fiber (Ex. 6) exhibited flame-retardance ratings of UL 94 5V-A at 2.3 mm thickness and good surface quality. These results show that the combination of wollastonite particles, alumina particles, and glass fiber in relatively low amounts improves the flame retardancy and burn-though resistance of polycarbonate compositions relative to compositions comprising similar amount of glass fiber or a combination of glass fiber and alumina particles.

**Table II**

| **Component** | **Ex. 4** | **Ex. 5** | **Ex. 6** |
|---|---|---|---|
| PC-A | 60.10 | 59.20 | 59. 34 |
| PC-C | 12.10 | 12.00 | -- |
| PC-B | -- | -- | 2.95 |
| SAN | 1.60 | 1.60 | 9.11 |
| ABS | 6.40 | 6.40 | 9.11 |
| FLAME RETARDANT A | 0.80 | 0.80 | 0.99 |
| FLAME RETARDANT B | -- | -- | -- |
| FLAME RETARDANT C | 9.00 | 9.00 | 9.00 |
| RELEASE AGENT | 0.40 | 0.40 | 0.40 |
| STABILIZER A | 0.10 | 0.10 | 0.10 |
| TPP | 2.00 | 2.00 | 2.00 |
| WOLLASTONITE | -- | -- | 3.00 |
| ALUMINA | -- | 1.00 | 1.00 |
| GLASS FIBER | 7.50 | 7.50 | 3.00 |
| UL94 5V rating (2.3 mm) | 5V-A | 5V-A | 5V-A |

### Examples-7-16

The amounts of the components present in the polycarbonate compositions are reported in Table III (in weight percentages). The resulting polycarbonate compositions were used to mold bar specimens and plaque specimens that were tested for flame retardancy according to the UL 94 standard 125 mm Vertical Burning Test. The results of that testing are reported in Table III.

As can be appreciated by reference to Table III, polycarbonate compositions comprising wollastonite particles, alumina particles, and glass fiber exhibited flame-retardance ratings of UL 94 5V-A at 2.3 mm thickness. The polycarbonate compositions comprising only one or two fillers selected from the group consisting of wollastonite particles, alumina particles, and glass fiber that exhibited flame-retardance ratings of UL 94 5V-A at 2.3 mm thickness had relatively high amounts of the individual fillers (Ex. 7 - Ex. 9 and Ex. 11), which deteriorated surface quality.

However, the polycarbonate compositions comprising wollastonite particles, alumina particles, and glass fiber that exhibited flame-retardance ratings of UL 94 5V-A at 2.3 mm thickness had relatively low amounts of the individual fillers (Ex. 12 and 14-16). These results show that the combination of wollastonite particles, alumina particles, and glass fiber in relatively low amounts improves the flame retardancy and burn-though resistance of polycarbonate compositions while not deteriorating surface quality of molded parts.

**Table III**

| **Component** | **Ex. 7** | **Ex. 8** | **Ex. 9** | **Ex. 10** | **Ex. 11** | **Ex. 12** | **Ex. 13** | **Ex. 14** | **Ex. 15** | **Ex. 16** |
|---|---|---|---|---|---|---|---|---|---|---|
| PC-A | 59.33 | 59.33 | 59.33 | 58.33 | 58.33 | 57.83 | 59.33 | 60.33 | 59.33 | 58.33 |
| PC-B | 2.95 | 2.95 | 2.95 | 2.95 | 2.95 | 2.95 | 2.95 | 2.95 | 2.95 | 2.95 |
| SAN | 9.11 | 9.11 | 9.11 | 9.11 | 9.11 | 9.11 | 9.11 | 9.11 | 9.11 | 9.11 |
| ABS | 9.11 | 9.11 | 9.11 | 9.11 | 9.11 | 9.11 | 9.11 | 9.11 | 9.11 | 9.11 |
| FLAME RETARDANT A | 1.00 | 1.00 | 1.00 | 1.00 | 1.00 | 1.00 | 1.00 | 1.00 | 1.00 | 1.00 |
| FLAME RETARDANT B | -- | -- | -- | 13.00 | 13.00 | 13.00 | 13.00 | 13.00 | 13.00 | 13.00 |
| FLAME RETARDANT C | 9.00 | 9.00 | 9.00 | -- | -- | -- | -- | -- | -- | -- |
| RELEASE AGENT | 0.40 | 0.40 | 0.40 | 0.40 | 0.40 | 0.40 | 0.40 | 0.40 | 0.40 | 0.40 |
| STABILIZER A | 0.10 | 0.10 | 0.10 | 0.10 | 0.10 | 0.10 | 0.10 | 0.10 | 0.10 | 0.10 |
| TPP | 2.00 | 2.00 | 2.00 | -- | -- | -- | -- | -- | -- | -- |
| WOLLASTONITE | -- | -- | 6.00 | -- | 6.00 | 3.00 | 3.00 | 1.00 | 1.00 | 1.00 |
| ALUMINA | -- | 1.00 | 1.00 | 6.00 | -- | 0.50 | -- | 2.00 | 3.00 | 4.00 |
| GLASS FIBER | 7.00 | 6.00 | -- | -- | -- | 3.00 | 3.00 | 1.00 | 1.00 | 1.00 |
| UL94 5V rating (2.3 mm) | 5V-A | 5V-A | 5V-A | 5V-B | 5V-A | 5V-A | 5V-A | 5V-A | 5V-A | 5V-A |

### Examples 17-27

The amounts of the components present in the polycarbonate compositions are reported in Table IV (in wt.%). The resulting polycarbonate compositions were used to mold bar specimens and plaque specimens that were tested for flame retardancy according to the UL 94 standard 125 mm Vertical Burning Test. The results of that testing are reported in Table IV. The number in parentheses for PC-D indicates the amount of glass fiber contributed by PC-D.

**Table IV**

| **Component** | **Ex. 17** | **Ex. 18** | **Ex. 19** | **Ex. 20** | **Ex.21** | **Ex. 22** | **Ex. 23** | **Ex. 24** | **Ex. 25** | **Ex. 26** | **Ex. 27** |
|---|---|---|---|---|---|---|---|---|---|---|---|
| PC-A | 51.83 | 49.33 | 51.83 | 49.33 | 51.83 | 49.33 | 51.83 | 49.33 | 52.83 | 50.33 | 53.83 |
| PC-B | 2.95 | 2.95 | 2.95 | 2.95 | 2.95 | 2.95 | 2.95 | 2.95 | 2.95 | 2.95 | 2.95 |
| PC-D | 7.50 (1.50) | 10.00 (2.00) | 7.50 (1.50) | 10.00 (2.00) | 7.50 (1.50) | 10.00 (2.00) | 7.50 (1.50) | 10.00 (2.00) | 7.50 (1.50) | 10.00 (2.00) | 7.50 (1.50) |
| SAN | 9.11 | 9.11 | 9.11 | 9.11 | 9.11 | 9.11 | 9.11 | 9.11 | 9.11 | 9.11 | 9.11 |
| ABS | 9.11 | 9.11 | -- | -- | 9.11 | 9.11 | -- | -- | 9.11 | 9.11 | 9.11 |
| FLAME RETARDANT A | 1.00 | 1.00 | 1.00 | 1.00 | 1.00 | 1.00 | 1.00 | 1.00 | 1.00 | 1.00 | 1.00 |
| FLAME RETARDANT B | 13.00 | 13.00 | 13.00 | 13.00 | 13.00 | 13.00 | 13.00 | 13.00 | 13.00 | 13.00 | 13.00 |
| IMPACT MODIFIER | -- | -- | 9.11 | 9.11 | -- | -- | 9.11 | 9.11 | -- | -- | -- |
| STABILIZER B | 0.10 | 0.10 | 0.10 | 0.10 | 0.10 | 0.10 | 0.10 | 0.10 | 0.10 | 0.10 | 0.10 |
| RELEASE AGENT | 0.40 | 0.40 | 0.40 | 0.40 | 0.40 | 0.40 | 0.40 | 0.40 | 0.40 | 0.40 | 0.40 |
| WOLLASTONITE | 3.00 | 3.00 | 3.00 | 3.00 | 2.00 | 2.00 | 2.00 | 2.00 | 1.00 | 1.00 | 1.00 |
| ALUMINA | 2.00 | 2.00 | 2.00 | 2.00 | 3.00 | 3.00 | 3.00 | 3.00 | 3.00 | 3.00 | 2.00 |
| UL94 5V rating (2.3 mm) | 5V-B | 5V-B | 5V-B | 5V-B | 5V-B | 5V-B | 5V-A | 5V-B | 5V-B | 5V-B | 5V-B |

### Examples-28-45

The amounts of the components present in the polycarbonate compositions are reported in Table V (in wt.%). The resulting polycarbonate compositions were used to mold bar specimens and plaque specimens that were tested for flame retardancy according to the UL 94 standard 125 mm Vertical Burning Test. The test results of those tests are reported in Table V. The number in parentheses for PC-D indicates the amount of glass fiber contributed by PC-D.

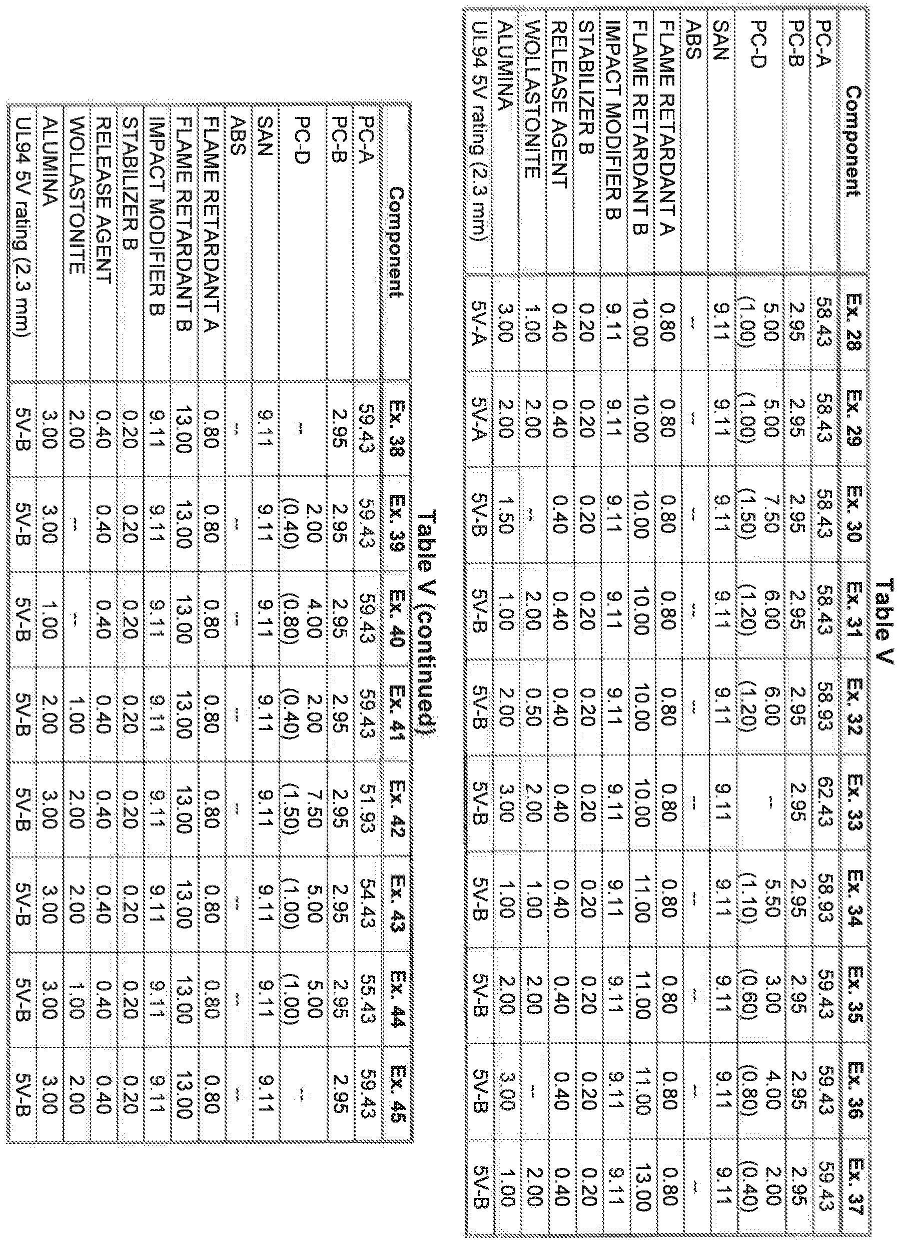

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein.

## Claims

1. A composition comprising:
50.0 wt.% to 65.0 wt.% polycarbonate;
5.0 wt.% to 15.0 wt.% styrene-acrylonitrile copolymer;
5.0 wt.% to 15.0 wt.% acrylonitrile-butadiene-styrene copolymer;
0.5 wt.% to 5.0 wt.% glass fiber;
0.5 wt.% to 5.0 wt.% alumina particles; and
0.5 wt.% to 5.0 wt.% wollastonite particles;
wherein the wt.%, all instances, is based on total weight of the composition,
wherein the composition exhibits a flame-retardance rating of UL 94 5V-A at 2.3 mm thickness or less.

2. The composition according to Claim 1, comprising 1.0 wt.% to 3.0 wt.% glass fiber, 1.0 wt.% to 5.0 wt.% alumina particles, and 1.0 wt.% to 5.0 wt.% wollastonite particles.

3. The composition according to Claim 1, comprising 1.0 wt.% to 1.5 wt.% glass fiber, 1.0 wt.% to 3.0 wt.% alumina particles, and 2.0 wt.% to 3.0 wt.% wollastonite particles.

4. The composition according to Claim 1 , comprising 1.0 wt.% glass fiber, 2.0 wt.% to 3.0 wt.% alumina particles, and 1.5 wt.% to 2.0 wt.% wollastonite particles.

5. The composition according to Claim 1, further comprising at least one member selected from the group consisting of bisphenol diphosphate, bisphenol A-based oligophosphate and tetrabromobisphenol A carbonate oligomer.

6. The composition according to Claim 1, further comprising polytetrafluoroethylene.

7. A composition comprising:
40.0 wt.% to 70.0 wt.% polycarbonate;
5.0 wt.% to 30.0 wt.% vinyl copolymer;
greater than 0 wt.% to 10.0 wt.% glass fiber;
greater than 0 wt.% to 10.0 wt.% alumina particles; and
greater than 0 wt.% to 10.0 wt.% wollastonite particles;
wherein the total amount of glass fiber, alumina particles, and wollastonite particles is no greater than 25% of the composition by weight; wherein the composition exhibits a flame-retardance rating of UL 94 5V-A at 2.3 mm thickness or less; and wherein the wt.%, all instances,
are based on total weight of the composition.

8. The composition according to Claim 7, comprising 1.0 wt.% to 3.0 wt.% glass fiber, 1.0 wt.% to 5.0 wt.% alumina particles, and 1.0 wt.% to 5.0 wt.% wollastonite particles.

9. The composition according to Claim 7, comprising 1.0 wt.% to 1.5 wt.% glass fiber, 1.0 wt.% to 3.0 wt.% alumina particles, and 2.0 wt.% to 3.0 wt.% wollastonite particles.

10. The composition according to Claim 7, comprising 1.0 wt.% glass fiber, 2.0 wt.% to 3.0 wt.% alumina particles, and 1.5 wt.% to 2.0 wt.% wollastonite particles.

11. The composition according to Claim 7, wherein the vinyl copolymer is selected from the group consisting of styrene-acrylonitrile copolymer, acrylonitrile-butadiene-styrene copolymer, and combinations thereof.

12. The composition according to Claim 7, wherein the vinyl copolymer comprises:
5.0 wt.% to 15.0 wt.% styrene-acrylonitrile copolymer; and
5.0 wt.% to 15.0 wt.% acrylonitrile-butadiene-styrene copolymer;
wherein the wt.%, all instances, are based on total weight of the composition.

13. The composition according to Claim 7, further comprising at least one member selected from the group consisting of bisphenol diphosphate, bisphenol A-based oligophosphate and tetrabromobisphenol A carbonate oligomer.

14. The composition according to Claim 7, further comprising polytetrafluoroethylene.

## Patentansprüche

1. Zusammensetzung, umfassend:
50,0 Gew.-% bis 65,0 Gew.-% Polycarbonat;
5,0 Gew.-% bis 15,0 Gew.-% Styrol-Acrylnitril-Copolymer;
5,0 Gew.-% bis 15,0 Gew.-% Acrylnitril-Butadien-Styrol-Copolymer;
0,5 Gew.-% bis 5,0 Gew.-% Glasfasern;
0,5 Gew.-% bis 5,0 Gew.-% Aluminiumoxidpartikel; und
0,5 Gew.-% bis 5,0 Gew.-% Wollastonitpartikel;
wobei die Gew.-%-Werte in allen Fällen auf das Gesamtgewicht der Zusammensetzung bezogen sind,
wobei die Zusammensetzung eine Flammhemmungseinstufung von UL 94 5V-A bei 2,3 mm Dicke oder weniger aufweist.

2. Zusammensetzung gemäß Anspruch 1, umfassend 1,0 Gew.-% bis 3,0 Gew.-% Glasfasern, 1,0 Gew.-% bis 5,0 Gew.-% Aluminiumoxidpartikel und 1,0 Gew.-% bis 5,0 Gew.-% Wollastonitpartikel.

3. Zusammensetzung gemäß Anspruch 1, umfassend 1,0 Gew.-% bis 1,5 Gew.-% Glasfasern, 1,0 Gew.-% bis 3,0 Gew.-% Aluminiumoxidpartikel und 2,0 Gew.-% bis 3,0 Gew.-% Wollastonitpartikel.

4. Zusammensetzung gemäß Anspruch 1, umfassend 1,0 Gew.-% Glasfasern, 2,0 Gew.-% bis 3,0 Gew.-% Aluminiumoxidpartikel und 1,5 Gew.-% bis 2,0 Gew.-% Wollastonitpartikel.

5. Zusammensetzung gemäß Anspruch 1, ferner umfassend wenigstens ein Element ausgewählt aus der Gruppe bestehend aus Bisphenoldiphosphat, Oligophosphat auf Bisphenol-A-Basis und Tetrabrombisphenol-A-carbonat-Oligomer.

6. Zusammensetzung gemäß Anspruch 1, ferner umfassend Polytetrafluorethylen.

7. Zusammensetzung, umfassend:
40,0 Gew.-% bis 70,0 Gew.-% Polycarbonat;
5,0 Gew.-% bis 30,0 Gew.-% Vinylcopolymer;
mehr als 0 Gew.-% bis 10,0 Gew.-% Glasfasern;
mehr als 0 Gew.-% bis 10,0 Gew.-% Aluminiumoxidpartikel; und
mehr als 0 Gew.-% bis 10,0 Gew.-% Wollastonitpartikel;
wobei die Gesamtmenge von Glasfasern, Aluminiumoxidpartikeln und Wollastonitpartikeln nicht mehr als 25 Gew.-% der Zusammensetzung beträgt;
wobei die Zusammensetzung eine Flammhemmungseinstufung von UL 94 5V-A bei 2,3 mm Dicke oder weniger aufweist;
wobei die Gew.-%-Werte in allen Fällen auf das Gesamtgewicht der Zusammensetzung bezogen sind.

8. Zusammensetzung gemäß Anspruch 7, umfassend 1,0 Gew.-% bis 3,0 Gew.-% Glasfasern, 1,0 Gew.-% bis 5,0 Gew.-% Aluminiumoxidpartikel und 1,0 Gew.-% bis 5,0 Gew.-% Wollastonitpartikel.

9. Zusammensetzung gemäß Anspruch 7, umfassend 1,0 Gew.-% bis 1,5 Gew.-% Glasfasern, 1,0 Gew.-% bis 3,0 Gew.-% Aluminiumoxidpartikel und 2,0 Gew.-% bis 3,0 Gew.-% Wollastonitpartikel.

10. Zusammensetzung gemäß Anspruch 7, umfassend 1,0 Gew.-% Glasfasern, 2,0 Gew.-% bis 3,0 Gew.-% Aluminiumoxidpartikel und 1,5 Gew.-% bis 2,0 Gew.-% Wollastonitpartikel.

11. Zusammensetzung gemäß Anspruch 7, wobei das Vinylcopolymer ausgewählt ist aus der Gruppe bestehend aus Styrol-Acrylnitril-Copolymer, Acrylnitril-Butadien-Styrol-Copolymer und Kombinationen davon.

12. Zusammensetzung gemäß Anspruch 7, wobei das Vinylcopolymer umfasst:
5,0 Gew.-% bis 15,0 Gew.-% Styrol-Acrylnitril-Copolymer; und
5,0 Gew.-% bis 15,0 Gew.-% Acrylnitril-Butadien-Styrol-Copolymer;
wobei die Gew.-%-Werte in allen Fällen auf das Gesamtgewicht der Zusammensetzung bezogen sind.

13. Zusammensetzung gemäß Anspruch 7, ferner umfassend wenigstens ein Element ausgewählt aus der Gruppe bestehend aus Bisphenoldiphosphat, Oligophosphat auf Bisphenol-A-Basis und Tetrabrombisphenol-A-carbonat-Oligomer.

14. Zusammensetzung gemäß Anspruch 7, ferner umfassend Polytetrafluorethylen.

## Revendications

1. Composition comprenant :
50,0% en poids à 65,0% en poids de polycarbonate ;
5,0% en poids à 15,0% en poids de copolymère styrène-acrylonitrile ;
5,0% en poids à 15,0% en poids de copolymère acrylonitrile-butadiène-styrène ;
0,5% en poids à 5,0% en poids de fibres de verre ;
0,5% en poids à 5,0% en poids de particules d'alumine ; et
0,5% en poids à 5,0% en poids de particules de wollastonite ;
pour tous les exemples, les % en poids étant basés sur le poids total de la composition,
la composition présentant une classe d'inflammabilité de 5V-A à 2,3 mm d'épaisseur ou moins, selon la norme UL 94.

2. Composition selon la revendication 1, comprenant 1,0% en poids à 3,0% en poids de fibres de verre, 1,0% en poids à 5,0% en poids de particules d'alumine, et 1,0% en poids à 5,0% en poids de particules de wollastonite.

3. Composition selon la revendication 1, comprenant 1,0% en poids à 1,5% en poids de fibres de verre, 1,0% en poids à 3,0% en poids de particules d'alumine, et 2,0% en poids à 3,0% en poids de particules de wollastonite.

4. Composition selon la revendication 1, comprenant 1,0% en poids de fibres de verre, 2,0% en poids à 3,0% en poids de particules d'alumine, et 1,5% en poids à 2,0% en poids de particules de wollastonite.

5. Composition selon la revendication 1, comprenant en outre au moins un élément choisi dans le groupe constitué par le diphosphate de bisphénol, l'oligophosphate à base de bisphénol A et l'oligomère de carbonate de tétrabromobisphénol A.

6. Composition selon la revendication 1, comprenant en outre du polytétrafluoroéthylène.

7. Composition comprenant :
40,0% en poids à 70,0% en poids de polycarbonate ;
5,0% en poids à 30,0% en poids de copolymère vinylique ;
plus de 0% en poids à 10% en poids de fibres de verre ;
plus de 0% en poids à 10% en poids de particules d'alumine ; et
plus de 0% en poids à 10% en poids de particules de wollastonite ;
la quantité totale de fibres de verre, de particules d'alumine, et de particules de wollastonite ne représentant pas plus de 25% de la composition en poids ; la composition présentant une classe d'inflammabilité de 5V-A à 2,3 mm d'épaisseur ou moins, selon la norme UL 94 ; et pour tous les exemples, les % en poids étant basés sur le poids total de la composition.

8. Composition selon la revendication 7, comprenant 1,0% en poids à 3,0% en poids de fibres de verre, 1,0% en poids à 5,0% en poids de particules d'alumine, et 1,0% en poids à 5,0% en poids de particules de wollastonite.

9. Composition selon la revendication 7, comprenant 1,0% en poids à 1,5% en poids de fibres de verre, 1,0% en poids à 3,0% en poids de particules d'alumine, et 2,0% en poids à 3,0% en poids de particules de wollastonite.

10. Composition selon la revendication 7, comprenant 1,0% en poids de fibres de verre, 2,0% en poids à 3,0% en poids de particules d'alumine, et 1,5% en poids à 2,0% en poids de particules de wollastonite.

11. Composition selon la revendication 7, le copolymère vinylique étant choisi dans le groupe constitué par le copolymère styrène-acrylonitrile, le copolymère acrylonitrile-butadiène-styrène, et des combinaisons correspondantes.

12. Composition selon la revendication 7, le copolymère vinylique comprenant :
5,0% en poids à 15,0% en poids de copolymère styrène-acrylonitrile ; et
5,0% en poids à 15,0% en poids de copolymère acrylonitrile-butadiène-styrène ;
pour tous les exemples, les % en poids étant basés sur le poids total de la composition.

13. Composition selon la revendication 7, comprenant en outre au moins un élément choisi dans le groupe constitué par le diphosphate de bisphénol, l'oligophosphate à base de bisphénol A et l'oligomère de carbonate de tétrabromobisphénol A.

14. Composition selon la revendication 7, comprenant en outre du polytétrafluoroéthylène.
